# EUROPEAN PATENT APPLICATION

(11) **EP 1 195 315 A2**
(43) Date of publication of application: **10.04.2002**
(21) Application number: 01308519.6
(22) Date of filing: 05.10.2001
(51) Int. Cl.: B62D 23/00, B62D 21/00

(54) **Vehicular frame assembly including hollow frame member that houses electrical battery**

(30) Priority: 07.10.2000 US 238702 P
(71) Applicant: DANA CORPORATION, Toledo, OH 43615 (US)
(72) Inventor: Durand, Robert D., Reading, Pennsylvania 19608 (US)
(74) Representative: Giles, Ashley Simon

(57) **Abstract**

A combined vehicle frame assembly and battery for a vehicle includes a plurality of structural members that are joined together to form a vehicle frame assembly, such as a ladder frame or space frame assembly. One of the plurality of structural members is formed as a closed channel structural member defining a hollow interior. A battery is disposed within the interior of the hollow structural member. Preferably, the structural member is formed in such a manner as to support and retain the battery therein to prevent relative movement during operation of the vehicle. The battery can be composed of either a single battery or a plurality of separate battery cells that are electrically connected together to provide electrical energy to the electrical system of the vehicle.

## Description

### BACKGROUND OF THE INVENTION

This invention relates in general to the manufacture of vehicle frame assemblies. In particular, this invention relates to an improved structure for a vehicular frame assembly including one or more hollow members, wherein at least one of the hollow members houses an electrical battery for use in operating an electrical system for the vehicle.

Many land vehicles in common use, such as automobiles, vans, and trucks, include a body and frame assembly that is supported upon a plurality of ground-engaging wheels by a resilient suspension system. The structures of known body and frame assemblies can be divided into two general categories, namely, separate and unitized. In a typical separate body and frame assembly, the structural components of the body portion and the frame portion of the vehicle are separate and independent from one another. When assembled, the frame portion of the assembly is resiliently supported upon the vehicle wheels by the suspension system and serves as a platform upon which the body portion of the assembly and other components of the vehicle can be mounted. Separate body and frame assemblies of this general type are found in most older vehicles, but remain in common use today for many relatively large or specialized use modern vehicles, such as large vans, sport utility vehicles, and trucks. In a typical unitized body and frame assembly, the structural components of the body portion and the frame portion are combined into an integral unit that is resiliently supported upon the vehicle wheels by the suspension system. Unitized body and frame assemblies of this general type are found in many relatively small modern vehicles, such as automobiles and minivans.

Traditionally, the various components of vehicular body and frame assemblies have been formed from open channel structural members, i.e., structural members that have a non-continuous cross sectional shape (such as U-shaped or C-shaped channel members, for example). For example, it is known to use one or more open channel structural members to form the side rails, the cross members, and other components of a ladder frame type of separate body and frame assembly. However, the use of open channel structural members to form the various components of vehicular body and frame assemblies has been found to be undesirable for several reasons.

To address this, it has been proposed to form one or more of the components of the vehicular body and frame assemblies from closed channel structural members, i.e., structural members that have a continuous cross sectional shape (such as tubular or box-shaped channel members, for example). This cross sectional shape is advantageous because it provides strength and rigidity to the vehicle body and frame component. Also, in those instances where the vehicle body and frame component has a generally rectilinear cross sectional shape, vertically and horizontally oriented surfaces are provided that are well adapted to have the body mount support brackets discussed above secured thereto. Furthermore, closed channel structural member are well suited to be deformed to a desired shape by hydroforming, which is a well known process that uses pressurized fluid supplied within the closed channel structural member to deform it into conformance with a surrounding die. Hydroforming has been found to be a desirable forming process because portions of a closed channel structural member can be quickly and easily deformed to have a complex cross sectional shape.

Additionally, virtually all land vehicles include an electrical system for starting the vehicle and, in many instances, operating some or all of the electrical accessories that are provided on the vehicle. A typical vehicle electrical system includes a battery or similar device that stores electrical energy. The battery is electrically connected through an ignition switch to a starter motor. Thus, when the ignition switch is closed, the battery supplies electricity to the starter motor, thereby operating the starter motor to start the engine. A typical vehicle electrical system also includes an alternator or similar device that converts mechanical energy (typically in the form of a rotatably driven input member) into electrical energy. Thus, when the engine of the vehicle is operating, the alternator can be driven to generate electrical energy to operate various electrical accessories provided on the vehicle and to re-charge the battery for subsequent use.

In most vehicles, the battery is housed in a single, relatively large, rectilinearly-shaped enclosure that is supported on (and, in some instances, secured to) a generally flat bracket that is provided within the engine compartment. Although this type of battery supporting structure has been employed successfully for many years, it has recently been found to be somewhat inconvenient because the amount of available space within the engine compartment has been decreasing in recent years. Also, when the battery is supported within the engine compartment in the manner described above, it is exposed to the environment in a relatively direct manner. Thus, it would be desirable to provide an improved structure for housing the battery of a vehicle electrical system in a different location to conserve space within the engine compartment and to reduce direct exposure to the environment.

### SUMMARY OF THE INVENTION

This invention relates to an improved structure for a vehicular frame assembly including one or more hollow members, wherein at least one of the hollow members houses an electrical battery for use in operating an electrical system for the vehicle. The combined vehicle frame assembly and battery for a vehicle includes a plurality of structural members that are joined together to form a vehicle frame assembly, such as a ladder frame or space frame assembly. One of the plurality of structural members is formed as a closed channel structural member defining a hollow interior. A battery is disposed within the interior of the hollow structural member. Preferably, the structural member is formed in such a manner as to support and retain the battery therein to prevent relative movement during operation of the vehicle. The battery can be composed of either a single battery or a plurality of separate battery cells that are electrically connected together to provide electrical energy to the electrical system of the vehicle.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is a perspective view of one example of a vehicle frame assembly including a plurality of hollow members, wherein one of the hollow members houses an electrical battery for use in operating an electrical system for the vehicle in accordance with this invention.
Fig. 2 is an enlarged sectional view of the one of the hollow members of the vehicle frame assembly housing the electrical battery taken along Line 2-2 of Fig. 1.
Fig. 3 is a simplified schematic diagram of a vehicle electrical system including the battery illustrated in Fig. 2.

### DETAILED DESCRIPTION OF THE PREFERRED EMBODIMENT

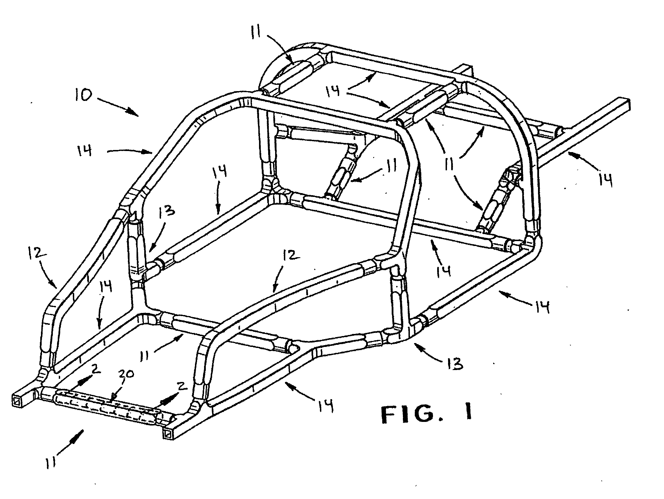

Referring now to the drawings, there is illustrated in Fig. 1 a vehicle frame assembly, indicated generally at 10, in accordance with this invention. The illustrated vehicle frame assembly 10 is intended to be representative of any type of frame assembly for use in any type of vehicle. Thus, this invention is not intended to be limited to the specific structure of the vehicle frame assembly 10 illustrated in Fig. 1. The illustrated vehicle frame assembly is an automobile space frame, i.e., a frame for an automobile including a plurality of components that are connected together to generally define an enclosed space for the occupants. However, the vehicle frame assembly 10 may be embodied, for example, as a ladder frame type of vehicle frame assembly or other type of separate body and frame assembly, such as described above.

The illustrated vehicle frame assembly 10 is composed of four different types of structural members which are secured together. The first type of structural member is referred to as a straight member, such as shown at 11, that can be characterized as being generally linear and elongated in shape. The second type of structural member is referred to as a curved member, such as shown at 12, that can be characterized as extending generally non-linearly. The third type of structural member is referred to as a joint node, such as shown at 13, that can be characterized as being relatively short in length and provided to join adjacent ones of the structural members together at a joint. The fourth type of structural member is referred to as a member node, such as shown at 14, that can be characterized as being relatively long in length and also provided to join adjacent ones of the structural members together at a joint. The structural members 11, 12, 13, and 14 can be formed of any suitable materials or combination of materials, such as steel, aluminum, and the like, and can be secured together using any suitable method, such as metal inert gas welding, adhesives, electromagnetic pulse welding, and the like.

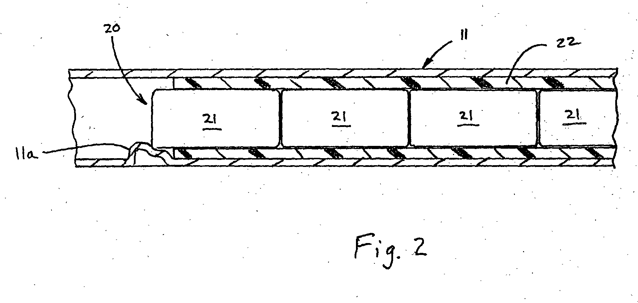

A battery, indicated generally at 20, is disposed within one of the hollow structural members, such as one of the straight members 11 for example, of the vehicle frame assembly 10. The structures of the hollow structural member 11 and the battery 20 are best shown in Fig. 2. As shown therein, the illustrated battery 20 is composed of a plurality of individual battery cells 21 that are connected in series together to provide a source of electrical energy for the vehicle. For example, the plurality of battery cells 21 can include seven individual six volt battery cells that, when electrically connected together, function as a forty-two volt battery system for the vehicle. The individual battery cells 21 can be electrically connected together by any suitable manner, such as one or more electrical conductors (not shown). The battery cells 21 can, for example, be arranged in a stacked end-to-end arrangement within the hollow interior of the structural member 11 of the vehicle frame assembly 10. Although this invention will be described and illustrated in the context of the seven individual six volt battery cells 21, it will be appreciated that the illustrated battery 20 is intended to be representative of any single device or group of devices, or portions thereof, that can store electrical energy for subsequent use in the manner described below.

The battery cells 21 are preferably formed having a shape that is generally complementary to the shape of the structural member within which they are disposed. Thus, as shown in Fig. 2, the battery cells 21 can be formed having generally cylindrical shapes that are complementary to the generally hollow cylindrical straight member 11 within which they are disposed. However, the battery cells 21 can be formed having any desired shape.

If desired, a support member, such as a sleeve 22, can be provided for supporting the battery cells 21 within the structural member 11 of the vehicle frame assembly 10. The support sleeve 22 can be embodied as any suitable structure that supports the battery cells 21 within the hollow interior of the structural member 11 and prevents them from moving relative to such structural member 11 during operation of the vehicle. To accomplish this, the support sleeve 22 is preferably attached to or otherwise fixed in position relative to the structural member 11. This can be done in any suitable manner, such as by adhesives, frictional engagement, fasteners, and the like. If desired, the support sleeve 52 may be formed having an outer surface that is complementary in shape to the inner surface of the structural member 11, although such is not required. Also, the battery cells 21 are preferably attached to or otherwise fixed in position relative to the support sleeve 21. This can also be done in any suitable manner, such as by adhesives, frictional engagement, fasteners, and the like. The support sleeve 22 can be formed from of any suitable material, such as a plastic or elastomeric material.

If desired, one or more portions of the structural member 11 can be deformed, such as shown at 11a in Fig. 2, to provide a positive stop for retaining the battery cells 21 and/or the support sleeve 22 therein. The stop 11a can be formed in any conventional manner, such as during the hydroforming process for initially forming the structural member to have a desired shape. The illustrated stop 11a extends inwardly within the interior of the structural member 11 and is adapted to be engaged by either a portion of the support sleeve 22, a portion of one of the battery cells 21, or both. However, the stops 11a may engage any desired portions of the support sleeve 22 or the battery cells 21 to support such battery cells 21 and to prevent them from moving relative to the structural member 11 during operation of the vehicle. Also, the stops 11a may extend outwardly from the interior of the structural member 11 if desired.

The structural member 11 can also include one or more depressions (not shown) that are formed into the wall thereof. These depressions could, for example, support the battery cells 21 in a lateral direction with respect to the elongated structural member 11. Thus, if the overall length of the plurality of the battery cells 21 is less than the overall length of the structural member 11, a depression can be formed in a portion of the structural member 11 to receive the battery cells 21 therein.

Preferably, the portion of the structural member 11 in which the battery cells 21 are disposed is a closed channel structural member having a continuous cross-section configuration. As a result, the battery cells 21 are completely surrounded and, therefore, protectively covered by the structural member 11. As a result, such battery cells 21 are not directly exposed to the environment. However, the structural member 11 may be formed having an opening (not shown) that can provide access to the interior of the structural member 11. This opening can be sufficiently large to allow the battery cells 12 to be removed and replaced as desired. Alternatively, this opening can be relatively small to permit only a pair of electrical conductors (not shown) to connect the battery cells 21 to the other components of the electrical system of the vehicle, as described below. In either instance, a removable access panel (not shown) can be provided to close the opening during normal operation of the vehicle.

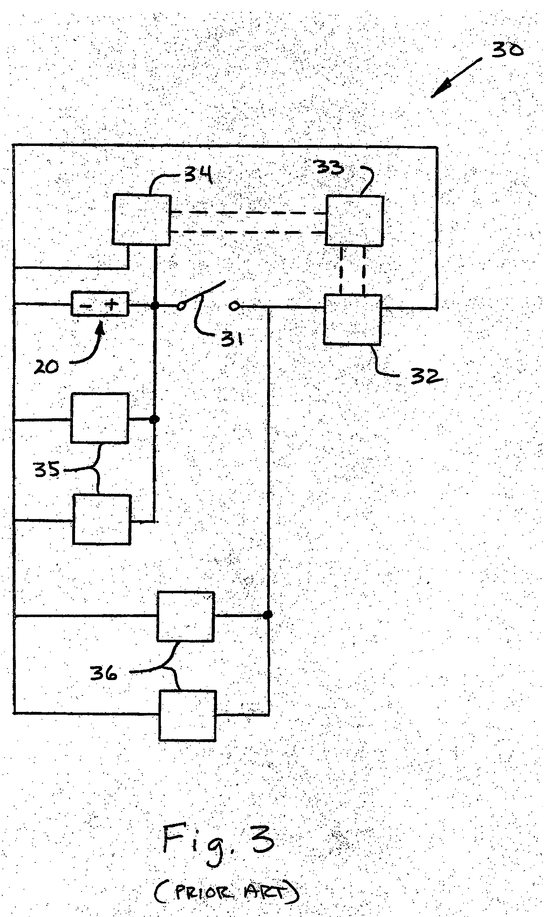

Referring not to Fig. 3, there is illustrated a schematic diagram of a vehicle electrical system, indicated generally at 30, that is conventional in the art. The includes the battery 20 that is housed within the structural member 11 of the vehicle frame assembly 10, as discussed above. The battery 20 is connected through an electrical ignition switch 31 to a starter motor 32. The starter 32 is mechanically coupled to an engine 33, such as a conventional internal combustion or diesel engine. When the ignition switch 31 is moved to a closed position, an electrical circuit between the battery 20 and the starter motor 32 is completed. As a result, the starter motor 32 is energized to start the vehicle engine 33 in a conventional manner. The engine 33 is mechanically connected to an electrical generating device, such as an alternator 34. The alternator 34 converts mechanical energy into electrical energy to charge the battery 20 while the vehicle is being operated. The alternator 34 can also provide electrical energy to various accessories 35 and 36 provided within the vehicle, including radios, horns, lights, power door locks, power windows, wipers, ventilation systems, window defrosters, and the like. As shown in Fig. 3, some of such accessories 35 can be connected to be run from the battery 20 regardless of the position of the ignition switch 31, while other of such accessories 36 can be connected to be run from the battery 20 only when the ignition switch 31 is moved to the closed position.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A combined vehicle frame assembly and battery for a vehicle comprising:
a plurality of structural members that are joined together to form a vehicle frame assembly, one of said plurality of structural members being a closed channel structural member defining an interior; and
a battery disposed within said interior of said one of said plurality of structural members.

2. The combined vehicle frame assembly and battery for a vehicle defined in Claim 1 wherein said plurality of structural members are joined together to form a space frame type of vehicle frame assembly.

3. The combined vehicle frame assembly and battery for a vehicle defined in Claim 1 wherein said battery includes a plurality of battery cells that are disposed within said interior of said structural member and are electrically connected to one other.

4. The combined vehicle frame assembly and battery for a vehicle defined in Claim 1 wherein said one of said plurality of structural members has a stop formed therein that is engaged by said battery.

5. The combined vehicle frame assembly and battery for a vehicle defined in Claim 1 further including a support member that is disposed within said interior of said one of said plurality of structural members, said battery being disposed within said support member.

6. The combined vehicle frame assembly and battery for a vehicle defined in Claim 5 wherein said support structure is a support sleeve that is disposed about said battery.

7. The combined vehicle frame assembly and battery for a vehicle defined in Claim 5 wherein said one of said plurality of structural members has a stop formed therein that is engaged by said support structure.

8. The combined vehicle frame assembly and battery for a vehicle defined in Claim 1 further including a vehicle electrical system that is electrically connected to said battery.
